# EUROPEAN PATENT SPECIFICATION

(11) **EP 2 244 417 B1**
(45) Date of publication and mention of the grant of the patent: **03.10.2012**
(21) Application number: 09728062.2
(22) Date of filing: 17.03.2009
(51) Int. Cl.: H04L 12/24, H04L 29/08, G06F 9/445

(54) **METHOD, SYSTEM AND APPARATUS FOR PROCESSING COMPONENT INSTALLATION**
VERFAHREN, SYSTEM UND VORRICHTUNG ZUR DURCHFÜHRUNG DER INSTALLATION VON KOMPONENTEN
PROCÉDÉ, SYSTÈME ET APPAREIL DE TRAITEMENT D'INSTALLATION DE COMPOSANT

(30) Priority: 03.04.2008 CN 200810089722
(43) Date of publication of application: 27.10.2010
(73) Proprietor: Huawei Device Co., Ltd., Longgang District Shenzhen Guangdong 518129 (CN)
(72) Inventor: LIU, Haitao, Shenzhen Guangdong 518129 (CN); WANG, Rui, Shenzhen Guangdong 518129 (CN)
(74) Representative: Thun, Clemens
(86) International application number: PCT/CN2009/070821
(87) International publication number: WO 2009/121264

(56) References cited:
- WO-A1-99/10809
- CN-A- 1 555 645
- CN-A- 1 936 844
- CN-A- 101 252 759
- US-A1- 2005 044 191
- US-A1- 2007 179 896
- US-A1- 2008 046 880
- OPEN MOBILE ALLIANCE: "Look and Feel Customization Requirements (Candidate Version 1.0)", ANNOUNCEMENT OPEN MOBILE ALLIANCE, XX, XX, 11 December 2007 (2007-12-11), pages 1-28, XP002481027, [retrieved on 2008-05-20]
- OPEN MOBILE ALLIANCE: "Software Component Management Object Requirements (Candidate Version 1.0)", ANNOUNCEMENT OPEN MOBILE ALLIANCE, 18 September 2007 (2007-09-18), pages 1-22, XP002629661, Retrieved from the Internet: URL:http://member.openmobilealliance.org/f tp/Public_documents/DM/SCOMO/Permanent_doc uments/OMA-RD-SCOMO-V1_0-20070918-C.zip [retrieved on 2011-03-23]

## Description

### FIELD OF THE INVENTION

The present invention relates to communication technologies, and in particular, to a processing method, a system, and an apparatus for component installation.

### BACKGROUND OF THE INVENTION

Open Mobile Alliance (OMA) Device Management (DM) V1.2 (as referred to "DM Specifications" hereinafter) is unified device management specifications developed by the OMA. It defines the functions of remote management on a destination terminal. The DM system provides a cost-efficient solution, through which a third party can manage and set the environment and configuration information in a wireless network terminal device (such as mobile terminal and functional objects in the terminal), and solve the problems in the using such network devices. In this solution, software and firmware are installed and upgraded in an Over The Air (OTA) mode, and therefore, more personalized and individualized services are provided, and the user experience is improved. The third party may be a mobile operator, Service Provider (SP), or an information management department of a partner.

With development of wireless communication applications, terminals become indispensable tools in the life of people, and people impose higher and higher requirements on the look-and-feel style of terminals. A Service Provider (SP) server expects to provide diversified look-and-feel styles for users so that the users can display the look-and-feel styles of their terminals in a personalized way. The SP server also expects to manage the Look-and-Feel Customization (LFC) package on the terminal for the benefit of the users and the SP server. Look-and-feel of a terminal refers to the contents presented by the terminal to the outside, for example, background, ring tone, and menu, which are known as look-and-feel elements. When multiple look-and-feel elements are provided for the terminal or operated by the terminal concurrently, the set of such elements is called a LFC package.

In a solution to customizing look-and-feel styles remotely based on OMA DM in the prior art, every element of the LFC package is managed. When the network delivers the look-and-feel contents, it changes the contents on the corresponding node directly.

In the process of developing the present invention, the inventor finds at least the following defects in the prior art:
When the software or LFC package is removed on the terminal, the node corresponding to the LFC package or the node corresponding to the software under "Deployed" is also removed. The SP server checks the installation state of the components on the terminal periodically. Consequently, even if a component has been removed by the user, the server requests re-installing the component again after the checking. The prior art provides no solution to this problem.

A PCT application WO 99/10809 disclosed a software publisher configurable software security mechanism, to prevent infinite trail of software. A Protection Builder Tool 100 is used to "inject" an executable file 101 with a code module 103 that allows or disallows use of a software product based on the "trial state". And the Protection Builder Tool 100 is also used to create and edit a license file 105. And the software may "leave tracks" on the user's machine such that a subsequent copy can ascertain that a previous copy has already been used on the user's machine. In software binding, when the software is run, information is stored in a location 109 on the user's machine, this information is used to indicate that a copy of the software product has been run and the user is not eligible to run it again, and may be used to prevent any subsequent version of the same software product from being run.

A US patent application US 2007/0179896 discloses a method for preventing unauthorized use of a software program on a computing device. The software program stores license data on the computer prior to execution. When a user installs a trial version of the software, the license data indicates that the software program is operating under a trial license, as opposed to a full license that is received after purchasing the software program. Trial licenses use persistence data. Persistence data is information written onto a hard disk of the computer at various locations. Persistence data contains the installation status of the software and, for the trial version, the persistence data may also contain the trial period expiration date. The persistence data is used by software developers to prevent users from downloading and/or installing multiple trial versions of the same software program without purchasing the software program

A US patent application 2005/0044191 discloses a method of managing downloading contents in a network system including a terminal device, a management server and a downloading site includes three phases of procedures. In a first phase procedure, the management server receives a request for downloading contents from the terminal device and performs a predetermined registration operation. In a second phase procedure, the management server transmits attribution data corresponding to the contents to be downloaded by the terminal device, the attribution data including information of the downloading site. In a third phase procedure, the terminal device accessed the downloading site in accordance with the information included in the attribution data and downloads the contents.

### SUMMARY OF THE INVENTION

The embodiments of the present invention provide a processing method as disclosed in claim 1, a system as disclosed in claim 8, and an apparatus as disclosed in claim 9 for component installation in order to prevent an SP server from downloading or installing a component repeatedly on the same terminal.

To fulfill the foregoing objectives, one aspect of the present invention is to provide a processing method for component installation the method is performed on a terminal, the processing method includes: receiving a component delivered by a server; and determining operations to be performed on the delivered component according to state information set for a removed component or information about the removed component, the state information set for a removed component or information about the removed component is set when the component is removed from the terminal.

Another aspect of the present invention is to provide a system for component installation. The system includes:
a terminal, adapted to: receive a component delivered by a server, set and store state information of a removed component or information about the component, and determine operations to be performed on the delivered component according to the state information of the component or the information about the component, the state information set for a removed component or information about the removed component is set when the component is removed from the terminal; and
a server, adapted to: query and obtain the state information of the removed component or the information about the removed component, where the information is set by the terminal; and determine operations to be performed on a subsequent component according to the state information of the removed component or the information about the removed component.

Another aspect of the present invention is to provide a terminal, which includes:
a receiving module, adapted to receive a component delivered by a server;
a setting module, adapted to set and store state information of a removed component or information about the component when the component is removed from the terminal; and
an operation determining module, adapted to determine operations to be performed on the component received by the receiving module according to the component state information or component information set by the setting module.

Compared with the prior art, the embodiments of the present invention bring in at least the following benefits: After the component is removed, the state information of the removed component or information about the component is set and stored, and the operations to be performed on the subsequent component are determined accordingly, thus preventing repeated download or installation of the removed component.

### Brief Description of the Drawings

FIG. 1 is a flowchart of a processing method for component installation in an embodiment of the present invention;
FIG. 2 shows a structure of an SCOMO management subtree in the first embodiment of the present invention;
FIG. 3 is a flowchart of another processing method for component installation in an embodiment of the present invention;
FIG. 4 shows how an SP server queries a terminal in the first embodiment of the present invention;
FIG. 5 shows a structure of a Removed subtree in the second embodiment of the present invention;
FIG. 6 shows how an SP server queries a terminal in the second embodiment of the present invention;
FIG. 7 shows a structure of an LFC management subtree in the third embodiment of the present invention;
FIG. 8 shows how an SP server queries a terminal in the third embodiment of the present invention;
FIG. 9 shows a structure of a Removed subtree in the fourth embodiment of the present invention;
FIG. 10 shows how an SP server queries a terminal in the fourth embodiment of the present invention;
FIG. 11 shows a system for component installation in an embodiment of the present invention;
FIG. 12 shows a structure of a terminal in an embodiment of the present invention; and
FIG. 13 shows a structure of a server in an embodiment of the present invention.

### DETAILED DESCRIPTION OF THE EMBODIMENTS

The embodiments of the present invention provide a processing method for component installation. When an installed component is removed on the terminal, the state information of the component or information about the component is set and stored, and the operations to be performed on the subsequent component are determined accordingly. In this way, the information about the component is still stored on the corresponding management subtree, and repeated download or installation of the removed component is avoided, and information about the component may be removed automatically upon a deadline when the deadline of storing the information is set.

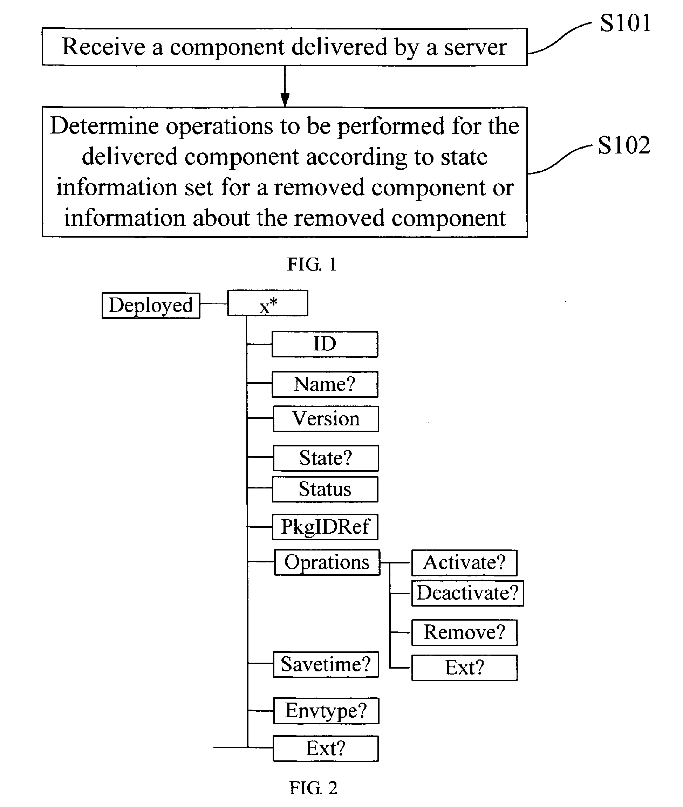

FIG. 1 is a flowchart of a processing method for component installation in an embodiment of the present invention. The processing method includes the following steps:
Step S101: Receive a component delivered by a server.
Step S102: Determine operations to be performed on the delivered component according to state information set for a removed component or information about the removed component. After a component is removed, the state information of the removed component or the information about the removed component is set and stored. The state information of the component may be set to "removed", indicating that the component is removed.

The information about the component includes the version of the component and the deadline of storing the component information, and includes at least one of the identifier of the component and the name of the component. The information about the component is set in the component management object.

After the state information of the component or the information about the component is set, the terminal compares the version of the delivered component with the version of the currently installed component when the SP server delivers a component identical to the removed component to the terminal again. If the version is the same, the terminal determines whether the deadline of storing the component information is the same as the current time through comparison, and if the deadline of storing the component information is different from the current time, it indicates that the deadline of storing the component information has not arrived and the terminal keeps storing the component information in the component management object. If the version of the removed component is different from the version of the delivered component, the terminal may:
(1) decide not to install the component delivered by the server; or
(2) decide to install the component delivered by the server; or
(3) decide whether to install the component delivered by the server according to a preset policy.

If the component re-delivered by the SP server to the terminal is different from the removed component, the terminal may install the delivered component.

Through the processing method for component installation above, when a component is removed, the state information of the component or the information about the component is set and stored, and the operations to be performed on the component delivered by the server are determined accordingly. Since the information about the removed component is still stored on the component management object, and repeated download or installation of the removed component on the terminal is avoided effectively, and terminal may remove the information about the component automatically upon a deadline when the deadline of storing the information about the removed component is set.

FIG. 2 shows a structure of a Software Component Management Object (SCOMO) management subtree in the first embodiment of the present invention. In the existing SCOMO management subtree, the terminal adds a "Removed" state value in the "Deployed/<X>/State" node, as shown in Table 1:

**Table 1**

| State | Description | Integer value |
|---|---|---|
| Inactive | The installed software is inactive | 10 |
| Active | The installed software is active | 20 |
| Removed | The software is removed | 30 |

Meanwhile, a Savetime node is added in the existing SCOMO management subtree to specify the deadline of storing the Removed instruction information. By default, the Savetime is set to 19000101. Table 2 shows the Removed instruction information.

**Table 2**

| State | Tree Occurrence | Format | Minimum access type |
|---|---|---|---|
| REQUIRED | ZeroOrOne | Date | Get |

When removing the software, the terminal does not remove the management subtree under "Deployed", but sets the State node to "Removed", indicating that the software is removed; and sets the value of the Savetime node. The terminal stores the information about the removed software, for example, version, identifier and name of the software, and deadline of storing the software information, etc..

It is assumed that the server of SP A installed a new software "GameA" for the terminal of user B a few days ago, the terminal instantiates the <x*> node under the Deployed node of the Management Object (MO) management tree shown in FIG. 2 to "GameA Component", and assigns a value to the node thereunder. User B has a poor experience of using the software, so the terminal removes the software.

At this time, the GameA Component subtree shown in FIG. 2 still exists, and the terminal sets the value of the State node to 30 (Removed). Meanwhile, the value of the Savetime node is specified by the terminal, or received by the terminal from the server. Here it is assumed that the value of the Savetime node is 20081230.

When the terminal of user B receives the software re-delivered by the SP server, the terminal compares the version of the delivered software with the version of the removed software. If the versions are the same, the terminal does not install the delivered software. Further, the terminal determines whether the deadline of storing the information about the removed software is the same with the current time through comparison. If the deadline of storing the information about the removed software is set to 2008-12-30 and the deadline of storing the information about the removed software is different from the current time (supposing that the current time is 2008-12-01), the terminal keeps storing the information about the removed software.

If the terminal finds that the delivered software is different from the removed software, or the version of the removed software is different from the version of the delivered software, the terminal may choose to install or not to install the software delivered by the server, or the terminal decides whether to install the software delivered by the server according to a preset policy.

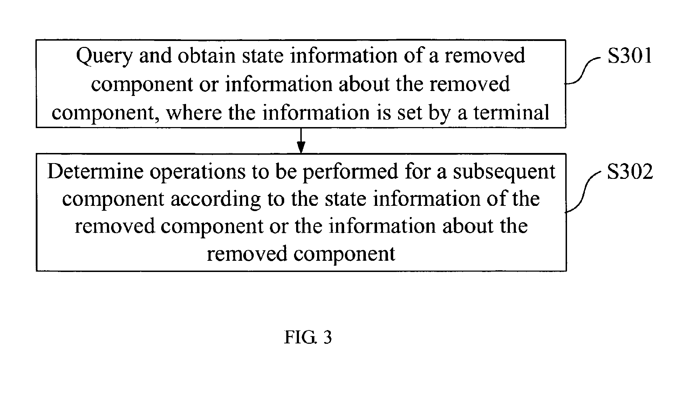

FIG. 3 is a flowchart of another processing method for component installation in an embodiment of the present invention. The processing method includes the following steps:
Step S301: Query and obtain state information of a removed component or information about the removed component, where the information is set by a terminal.

After the component is removed, the terminal sets and stores the state information of the removed component or the information about the removed component. When querying the terminal, the SP server obtains the state information of the removed component or the information about the removed component.

Step S302: Determine operations to be performed on a subsequent component according to the state information of the removed component or the information about the removed component. If the subsequent component is different from the removed component, or, if the subsequent component is the same as the removed component but the version of the subsequent component is different from the version of the removed component, the SP server recommends the terminal that the subsequent component be installed.

If the version of the subsequent component is the same as the version of the removed component but the deadline of storing the information about the removed component is different from the current time, the SP server keeps storing the information about the removed component.

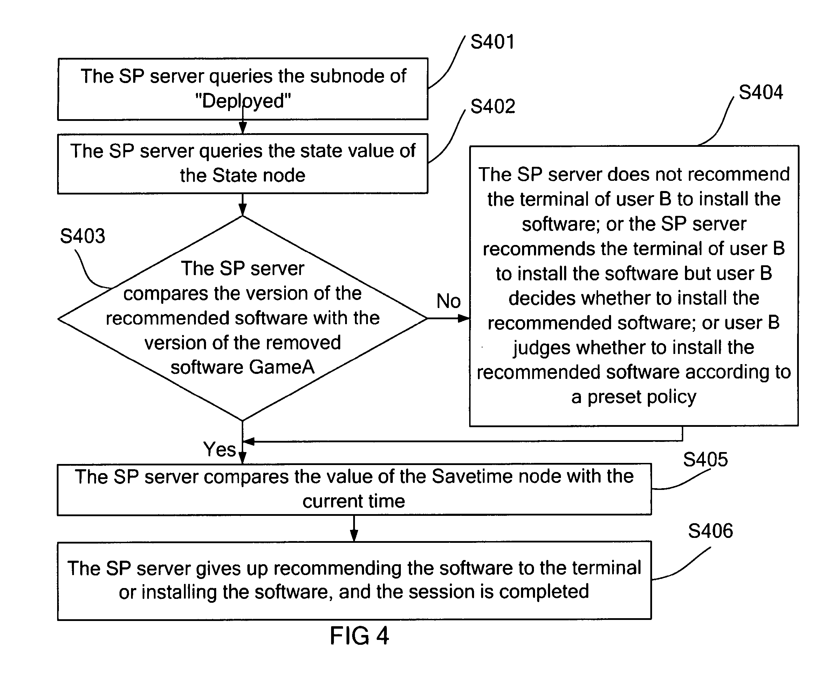

Continue referring to FIG. 2, if user B is not satisfied with the GameA software provided by the server of SP A, the terminal removes it. Supposing that the SP server queries the terminal one month later, the SP server performs the process shown in FIG. 4, including:
Step S401: The SP server queries the subnode of "Deployed" and finds a relevant subtree of GameA software - "GameA Component".
Step S402: Through querying, the SP server finds that the state value of the State node is 30, and proceeds to step S403.
Step S403: The SP server compares the version of the recommended software with the version of the removed GameA software. If the versions are the same, the SP server performs step S405; if the version of the recommended software is different from the version of the removed GameA software, the SP server performs step S404.
Step S404: The SP server does not recommend the terminal of user B that the recommended software be installed; or the SP server recommends the terminal of user B that the software be installed, but user B decides whether to install the recommended software; or user B judges whether to install the recommended software according to a preset policy. If the terminal does not install the recommended software, the process proceeds to step S405.
Step S405: The SP server compares the value of the Savetime node (20081230) with the current time (for example, 20070910), and finds that the deadline of storing the information has not arrived. Therefore, the SP server keeps storing the "GameA Component" management subtree on the SCOMO management tree.
Step S406: The SP server gives up recommending the software to the terminal or installing the software, and the session is completed.

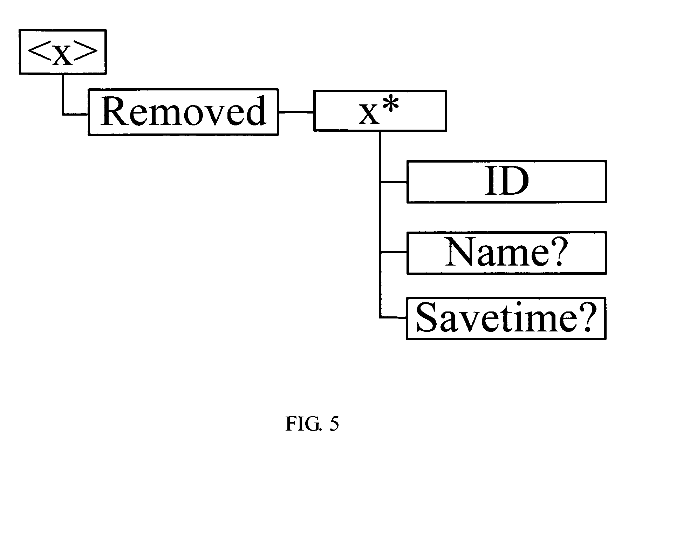

FIG. 5 shows a structure of a Removed subtree in the second embodiment of the present invention. In the terminal in the second embodiment, a Removed subtree is added in the existing SCOMO management subtree. The nodes of the Removed subtree are described below:

**<X>/Removed**

| State | Tree Occurrence | Format | Minimum access type |
|---|---|---|---|
| REQUIRED | One | Node | Get |

This node is a parent node of all removed software information.

**<X>/Removed/<X>**

| State | Tree Occurrence | Format | Minimum access type |
|---|---|---|---|
| REQUIRED | ZeroOrMore | Node | Get |

This node is a placeholder of removed software in the terminal.

**<X>/Removed/<X>/ID**

| State | Tree Occurrence | Format | Minimum access type |
|---|---|---|---|
| REQUIRED | One | Chr | Get |

This node is a leaf node, which specifies the ID of the removed software in the terminal and uniquely identifies this software. Its value is the same as the value in the corresponding Deployed/<X>/ID.

**<X>/Removed/<X>/Version**

| State | Tree Occurrence | Format | Minimum access type |
|---|---|---|---|
| REQUIRED | One | Chr | Get |

This node is a leaf node, and specifies the version of the removed software in the terminal. Its value is the same as the value in the corresponding Deployed/<X>/Version.

**<X>/Removed/<X>/Name**

| State | Tree Occurrence | Format | Minimum access type |
|---|---|---|---|
| OPTIONAL | ZeroOrOne | Chr | Get |

This node is a leaf node, and specifies the name of the removed software in the terminal. Its value is the same as the value in the corresponding Deployed/<X>/Name.

**<X>/Removed/<X>/Savetime**

| State | Tree Occurrence | Format | Minimum access type |
|---|---|---|---|
| REQUIRED | ZeroOrOne | Date | Get |

This node is a leaf node, and specifies a deadline of storing Deployed/Removed/<X> to avoid permanent storage of futile information. Its value is 19000101 by default.

When removing the software, the terminal also removes the corresponding management subtree under "Deployed", creates the corresponding software installation processing subtree under "Removed", and sets the corresponding value.

It is assumed that the server of SP A installed a new software "GameA" for the terminal of user B a few days ago, the terminal instantiates the <x*> node under the Deployed node of the MO management tree shown in FIG. 2 to "GameA Component", and assigns a value to the node under it. User B has a poor experience of using the software, so the terminal removes the software.

In this case, the GameA Component management subtree shown in FIG. 2 is also removed, and a GameA Removed subtree is created under the Removed node shown in FIG. 5. The values of ID, Name, and Version are the same as the corresponding values under the GameA Component node under the removed Deployed node. The value of the Savetime node is specified by the terminal, or received by the terminal from the server. Here it is assumed that the value of Savetime is 20081230.

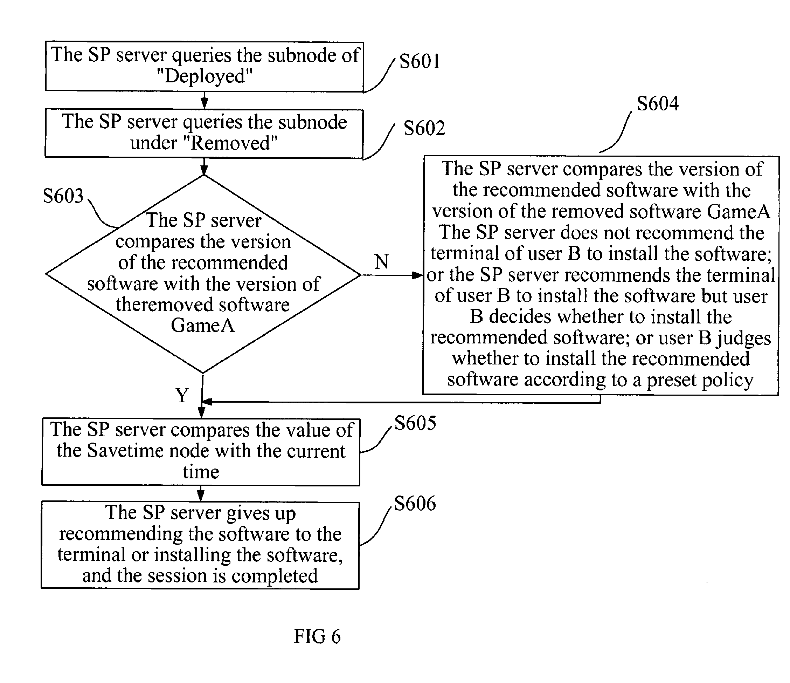

Supposing that the SP server queries the terminal one month later, the SP server performs the process shown in FIG. 6, including:
Step S601: The SP server queries the subnode of "Deployed" and finds no relevant subtree of GameA software.
Step S602: The SP server queries the subnode under "Removed" and finds a relevant subtree of GameA software - "GameA Removed".
Step S603: The SP server compares the version of the recommended software with the version of the removed GameA software. If the version is the same, the SP server performs step S605; if the version of the recommended software is different from the version of the removed GameA software, the SP server performs step S604.
Step S604: The SP server does not recommend the terminal of user B that the software be installed; or the SP server recommends the terminal of user B that the software be installed but user B decides whether to install the recommended software; or user B judges whether to install the recommended software according to a preset policy. If the terminal does not install the recommended software, the process proceeds to step S605.
Step S605: The SP server compares the value of the Savetime node (20081230) with the current time (for example, 20070910), and finds that the deadline of storing the information has not arrived. Therefore, the SP server keeps storing the "GameA Removed" subtree.
Step S606: The SP server gives up recommending the software to the terminal or installing the software, and the session is completed.

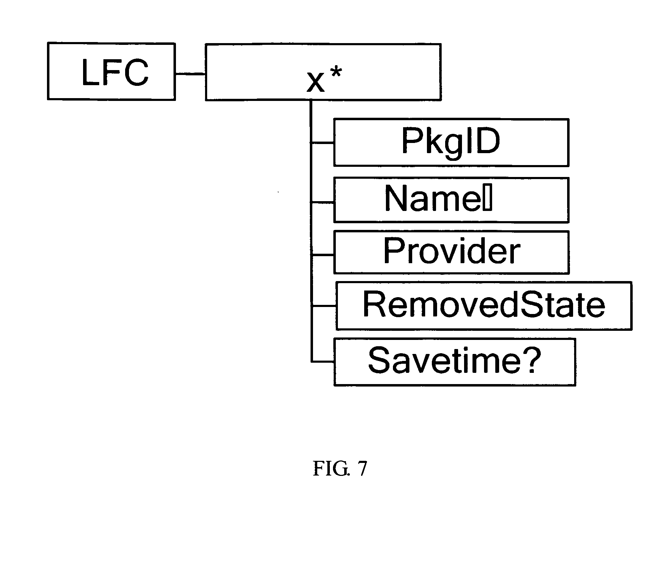

FIG. 7 shows a structure of an LFC management subtree in the third embodiment of the present invention. In the third embodiment, a RemovedState node and a Savetime node are added in the existing LFC management subtree. The nodes are described below:

**LFC Package**

| State | Tree Occurrence | Format | Minimum access type |
|---|---|---|---|
| REQUIRED | One | Node | Get |

This node is a parent node of all LFC packages on the terminal.

**LFC Package/<X>**

| State | Tree Occurrence | Format | Minimum access type |
|---|---|---|---|
| REQUIRED | ZeroOrMore | Node | Get |

This node is a placeholder of the LFC package in the terminal.

**LFC Package/<X>/PkgID**

| State | Tree Occurrence | Format | Minimum access type |
|---|---|---|---|
| REQUIRED | One | Chr | Get |

This node is a leaf node, which specifies the ID of the LFC package in the terminal and uniquely identifies the LFC package.

**LFC Package/<X>/Name**

| State | Tree Occurrence | Format | Minimum access type |
|---|---|---|---|
| OPTIONAL | ZeroOrOne | Chr | Get |

This node is a leaf node, which specifies the name of the LFC package in the terminal.

**LFC Package/<X>/Version**

| State | Tree Occurrence | Format | Minimum access type |
|---|---|---|---|
| REQUIRED | One | Chr | Get |

This node is a leaf node, which specifies the version of the LFC package in the terminal.

**LFC Package/<X>/Provider**

| State | Tree Occurrence | Format | Minimum access type |
|---|---|---|---|
| OPTIONAL | ZeroOrOne | Chr | Get |

This node is a leaf node, which specifies the provider of the LFC package in the terminal.

**LFC Package/<X>/RemovedState**

| State | Tree Occurrence | Format | Minimum access type |
|---|---|---|---|
| REQUIRED | One | Bool | Get |

This node is a leaf node, indicating whether the LFC package in the terminal is removed. The value "1" indicates that the LFC package is removed, and "0" indicates that the LFC package is not removed. By default, the value of this node is "0". This node is a new node added on the LFC management subtree in an embodiment of the present invention.

**<X>/Removed/<X>/Savetime**

| State | Tree Occurrence | Format | Minimum access type |
|---|---|---|---|
| REQUIRED | ZeroOrOne | Date | Get |

This node is a leaf node, and specifies a deadline of storing the LFC package information to avoid permanent storage of futile information. Its value is 19000101 by default.

When removing the LFC package, the terminal does not remove the corresponding management subtree, but sets the state of the RemovedState node to "1" and sets the value of the Savetime node.

It is assumed that the server of SP A installed a new LFC package A for the terminal of user B a few days ago. The terminal instantiates the <x*> node under the LFC management subtree shown in FIG. 7 to "LFC Package A", and assigns a value to the node under it. User B has a poor experience of using the software, so the terminal removes the LFC package.

At this time, the LFC Package subtree shown in FIG. 7 still exists, and the terminal sets the value of the RemoveState node to 1, indicating that the LFC package is removed. Meanwhile, the value of the Savetime is specified by the terminal, or received by the terminal from the server. Here it is assumed that the value of the Savetime node is 20081230.

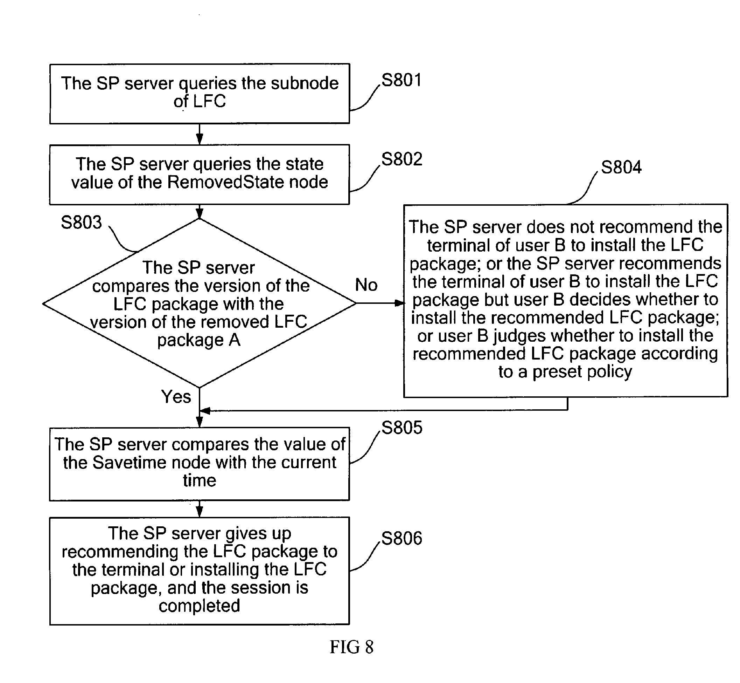

Assuming that the SP server queries the terminal one month later, the SP server performs the process shown in FIG. 8, including:
Step S801: The SP server queries the subnode of LFC and finds a relevant subtree of LFC Package A- "LFC Package A".
Step S802: Through querying, the SP server finds that the state value of the RemovedState node is 1, and proceeds to step S803.
Step S803: The SP server compares the version of the recommended LFC package with the version of the removed LFC package A. If the version is the same, the SP server performs step S805; if the version of the recommended LFC package is different from the version of the removed LFC package A, the SP server performs step S804.
Step S804: The SP server does not recommend the terminal of user B that the LFC package be installed; or the SP server recommends the terminal of user B that the LFC package be installed but user B decides whether to install the recommended LFC package; or user B judges whether to install the recommended LFC package according to a preset policy. If the terminal does not install the recommended LFC package, the process proceeds to step S805.
Step S805: The SP server compares the value of the Savetime node (20081230) with the current time (for example, 20070910), and finds that the deadline of storing the information has not arrived. Therefore, the SP server keeps storing the "LFC Package A" management subtree.
Step S806: The SP server gives up recommending the LFC package to the terminal or installing the LFC package, and the session is completed.

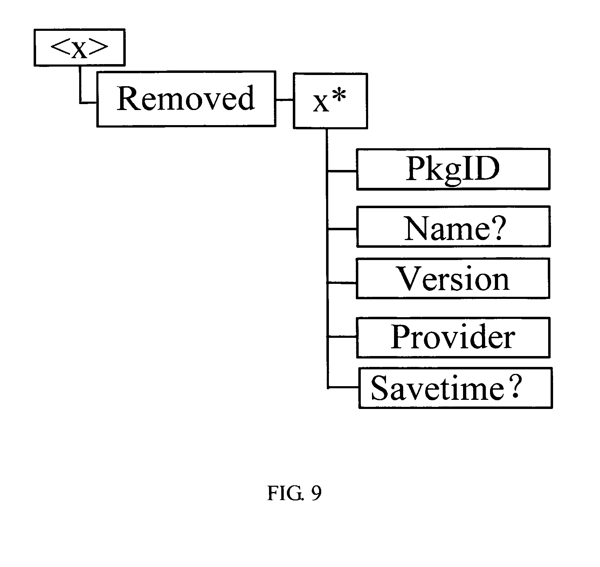

FIG. 9 shows a structure of a Removed subtree in the fourth embodiment of the present invention. In the terminal in the fourth embodiment, a Removed subtree is added in the existing LFC management subtree. The nodes of the Removed subtree are described below:

**<X>/Removed**

| State | Tree Occurrence | Format | Minimum access type |
|---|---|---|---|
| REQUIRED | One | Node | Get |

This node is a parent node of all removed LFC package information.

**<X>/Removed/<X>**

| State | Tree Occurrence | Format | Minimum access type |
|---|---|---|---|
| REQUIRED | ZeroOrMore | Node | Get |

This node is a placeholder of the removed LFC package in the terminal.

**LFC Package/<X>/PkgID**

| State | Tree Occurrence | Format | Minimum access type |
|---|---|---|---|
| REQUIRED | One | Chr | Get |

This node is a leaf node, which specifies the ID of the LFC package in the terminal and uniquely identifies the LFC package.

**LFC Package/<X>/Name**

| State | Tree Occurrence | Format | Minimum access type |
|---|---|---|---|
| OPTIONAL | ZeroOrOne | Chr | Get |

This node is a leaf node, which specifies the name of the LFC package in the terminal.

**LFC Package/<X>/Version**

| State | Tree Occurrence | Format | Minimum access type |
|---|---|---|---|
| REQUIRED | One | Chr | Get |

This node is a leaf node, which specifies the version of the LFC package in the terminal.

**LFC Package/<X>/Provider**

| State | Tree Occurrence | Format | Minimum access type |
|---|---|---|---|
| OPTIONAL | ZeroOrOne | Chr | Get |

This node is a leaf node, which specifies the provider of the LFC package in the terminal.

**<X>/Removed/<X>/Savetime**

| State | Tree Occurrence | Format | Minimum access type |
|---|---|---|---|
| REQUIRED | ZeroOrOne | Date | Get |

This node is a leaf node, and specifies a deadline of storing the LFC package to avoid permanent storage of futile information. Its value is 19000101 by default.

When removing the LFC package, the terminal also removes the corresponding management subtree, creates the corresponding removed LFC package management subtree under "Removed", and sets the corresponding value.

It is assumed that the server of SP A installed a new LFC package A for the terminal of user B a few days ago. The terminal instantiates the <x*> node under the LFC management subtree show in FIG. 7 to "LFC Package A", and assigns a value to the node under it. User B has a poor experience of using the software, so the terminal removes the LFC package.

In this case, the LFC Package A management subtree corresponding to Package A shown in FIG. 7 is also removed, and a Package A Removed subtree is created under the Removed node shown in FIG. 9. The values of ID, Name, and Version are the same as the corresponding values under the removed LFC Package A management subtree. The value of the Savetime node is specified by the terminal, or received by the terminal from the server. Here it is assumed that the value of Savetime is 20081230.

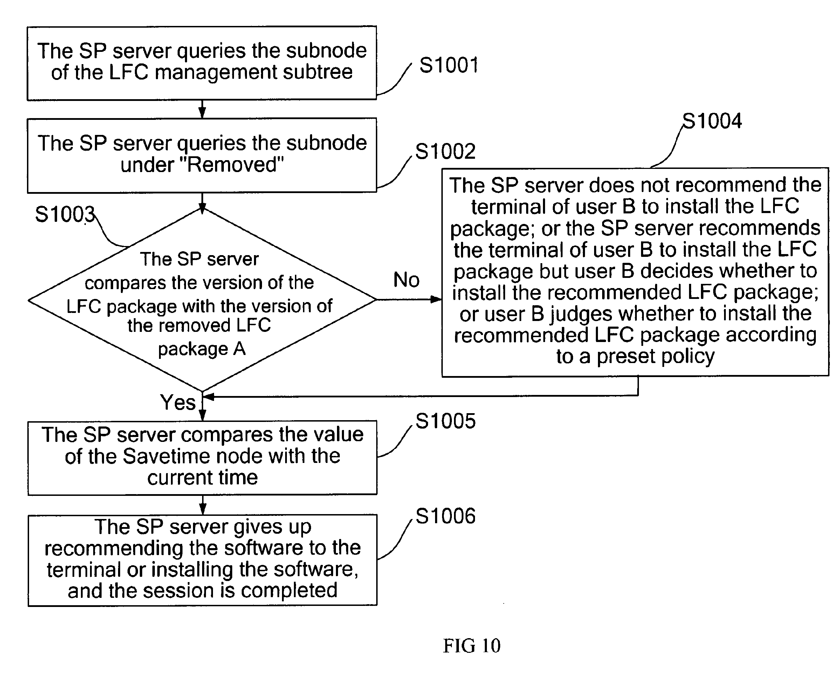

Assuming that the SP server queries the terminal one month later, the SP server performs the process shown in FIG. 10, including:
Step S1001: The SP server queries the subnode of the LFC management subtree and finds no relevant subtree corresponding to LFC Package A.
Step S1002: The SP server queries the subnode under "Removed" and finds a relevant subtree of Package A- "Package A Removed".
Step S1003: The SP server compares the version of the recommended LFC package with the version of the removed LFC package A. If the version is the same, the SP server performs step S1005; if the version of the recommended LFC package is different from the version of the removed LFC package A, the SP server performs step S1004.
Step S1004: The SP server does not recommend the terminal of user B that the LFC package be installed; or the SP server recommends the terminal of user B that the LFC package be installed but user B decides whether to install the recommended LFC package; or user B judges whether to install the recommended LFC package according to a preset policy. If the terminal does not install the recommended LFC package, the process proceeds to step S1005.
Step S1005: The SP server compares the value of the Savetime node (20081230) with the current time (for example, 20070910), and finds that the deadline of storing the information has not arrived. Therefore, the SP server keeps storing the "Package A Removed" subtree.
Step S1006: The SP server gives up recommending the LFC package to the terminal or installing the LFC package, and the session is completed.

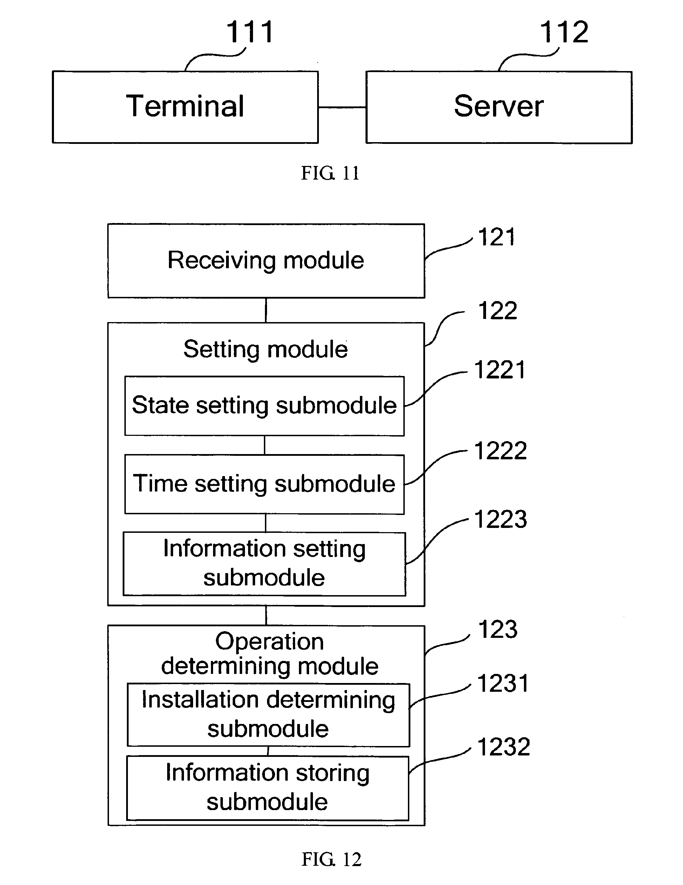

FIG. 11 shows a system for component installation in an embodiment of the present invention. The system includes:
a terminal 111, adapted to: receive a component delivered by a server 112, and determine operations to be performed on the delivered component according to state information set for a removed component or information about the removed component; and
a server 112, adapted to: query and obtain the state information of the removed component or the information about the removed component, where the information is set by the terminal 111; and determine operations to be performed on a subsequent component according to the state information of the removed component or the information about the removed component.

FIG. 12 shows a structure of a terminal in an embodiment of the present invention. The terminal includes:
a receiving module 121, adapted to receive a component delivered by a server;
a setting module 122, adapted to set and store state information of a removed component or information about the component; and
an operation determining module 123, adapted to determine operations to be performed on the component received by the receiving module 121 according to the component state information or component information set by the setting module 122.

The setting module 122 includes a state setting submodule 1221, adapted to set the state information of the component to "removed".

The setting module 122 further includes a time setting submodule 1222, adapted to set the deadline of storing the component information after the state setting submodule 1221 sets the state information of the component to "removed".

The setting module 122 further includes an information setting submodule 1223, adapted to set the component information into a component management object.

The operation determining module 123 includes an installation determining submodule 1231, adapted to: decide to install the component received by the receiving module 121 if the component received by the receiving module 121 is different from the removed component; or decide to install the component received by the receiving module 121 if the component received by the receiving module 121 is the same as the removed component but the version of the component received by the receiving module 121 is different from the version of the removed component; or decide not to install the component received by the receiving module 121; or decide whether to install the component received by the receiving module 121 according to a preset policy.

The operation determining module 123 further includes an information storing submodule 1232, adapted to keep storing the information about the removed component if the component received by the receiving module 121 is the same as the removed component, the version of the component received by the receiving module 121 is the same as the version of the removed component, and the deadline of storing the information about the removed component is different from the current time.

Through the terminal described above, the setting module 122 sets the state information of the component and the information about the component, and the operation determining module 123 determines the operation to be performed on the component received by the receiving module 121 according to the information stored by the setting module 122, thus preventing the terminal from installing a component repeatedly. Moreover, a deadline of storing the removed component information is set to avoid permanent storage of the information about the removed component.

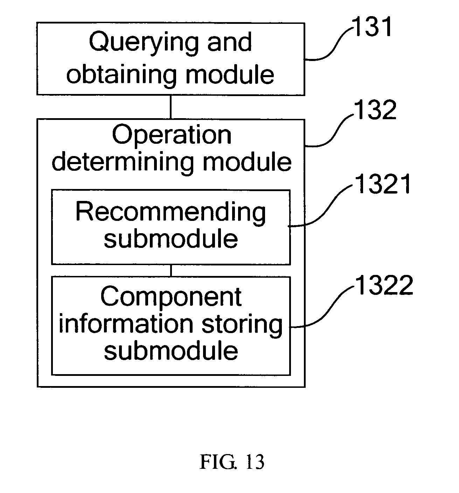

FIG. 13 shows a structure of a server in an embodiment of the present invention. The server includes:
a querying and obtaining module 131, adapted to query and obtain state information of a removed component or information about the removed component, where the information is set by a terminal; and
an operation determining module 132, adapted to determine operations to be performed on a subsequent component according to the state information of the removed component or the information about the removed component, where the information is obtained by the querying and obtaining module 131.

The operation determining module 132 includes a recommending submodule 1321, adapted to: recommend installation of the subsequent component if the subsequent component is different from the removed component; or, if the subsequent component is the same as the removed component but the version of the subsequent component is different from the version of the removed component.

The operation determining module 132 includes a component information storing submodule 1322, adapted to keep storing the information about the removed component if the version of the subsequent component is the same as the version of the removed component but the deadline of storing the information about the removed component is different from the current time.

By the server described above, the querying and obtaining module 131 obtains the state information of the removed component and the information about the removed component, where the information is set by the terminal; and the operation determining module 132 determines the operation to be performed on the subsequent component according to the information obtained by the querying and obtaining module 131, thus preventing the server from recommending the terminal that a component be installed repeatedly. Moreover, a deadline of storing the removed component information is set to avoid permanent storage of the information about the removed component.

Through the descriptions of the preceding embodiments, those skilled in the art may understand that the present invention may be implemented by hardware only or by software and necessary universal hardware. Based on such understandings, the technical solution under the present invention may be embodied in the form of a software product. The software product may be stored in a nonvolatile storage medium, which can be a Compact Disk Read-Only Memory (CD-ROM), Universal Serial Bus (USB) flash drive, or a removable hard drive. The software product includes a number of instructions that enable a computer device (personal computer, server, or network device) to execute the processing methods provided in the embodiments of the present invention.

The above descriptions are merely specific embodiments of the present invention, but not intended to limit the scope of the present invention. Any modification, equivalent replacement, or improvement made without departing from the principle of the present invention should fall within the scope of the present invention.

## Claims

1. A processing method for a software component installation, the method is performed on a terminal, comprising:
receiving a software component delivered by a server; and
determining operations to be performed on the delivered software component according to state information set and stored for a removed software component previously installed on the terminal or information set and stored about the removed software component, the state information set and stored for the removed software component or information about the removed software component is set and stored when the removed software component previously installed on the terminal is removed from the terminal.

2. The processing method for software component installation according to claim 1, wherein:
the setting of the state information of the removed software component comprises: keeping a management subtree corresponding to the removed software component and setting the state information of the software component to "removed".

3. The processing method for software component installation according to claim 2, wherein:
after setting the state information of the software component to "removed", the processing method further comprises: setting a deadline of storing the information about the software component;
the determining of the operations to be performed for the delivered software component according to the state information set for the removed software component further comprises: keeping storing the information about the removed software component if the version of the delivered software component is the same as the version of the removed software component but the deadline is different from current time.

4. The processing method for software component installation according to claim 1, wherein:
the information about the removed software component comprises version of the removed software component and a deadline of storing the information about the software component, and comprises at least one of an identifier of the removed software component and a name of the removed software component; and the information about the removed software component is set in a software component management object.

5. The processing method for software component installation according to claim 1, wherein: the determining of the operations to be performed on the delivered software component according to the state information set for the removed software component or the information about the removed software component comprises:
if the delivered software component is the same as the removed software component but version of the delivered software component is different from version of the removed software component deciding to install the delivered software component, or deciding not to install the delivered software component, or deciding whether to install the delivered software component according to a preset policy.

6. The processing method for software component installation according to claim 5, wherein: the information about the removed software component further comprises a deadline of storing the information about the software component;
the determining of the operations to be performed for the delivered software component according to the information about the removed software component further comprises:
keeping storing the information about the removed software component if the version of the delivered software component is the same as the version of the removed software component but the deadline of storing the information about the removed software component is different from current time.

7. The processing method for software component installation according to claim 1, wherein: the determining of the operations to be performed for the delivered software component according to the state information set for the removed software component or the information about the removed software component comprises:
installing the delivered software component if the delivered software component is different from the removed software component.

8. A system for software component installation, comprising:
a terminal, adapted to: receive a software component delivered by a server, and determine operations to be performed on the delivered software component according to state information set and stored for a removed software component previously installed on the terminal or information set and stored about the removed software component, the state information set and stored for the removed software component or information about the removed software component is set when the removed software component previously installed on the terminal is removed from the terminal; and
the server, adapted to: query and obtain the state information of the removed software component or the information about the removed software component wherein the information is set and stored by the terminal, and determine operations to be performed on the delivered software component according to the state information of the removed software component or the information about the removed software component.

9. A terminal, comprising:
a receiving module, adapted to receive a software component delivered by a server;
a setting module, adapted to set and store state information of a removed software component previously installed on the terminal or set and store information about the removed software component when the removed software component previously installed on the terminal is removed from the terminal; and
an operation determining module, adapted to determine operations to be performed on the software component received by the receiving module according to the state information of the removed software component or the information about the removed software component, wherein the information is set and stored by the setting module.

10. The terminal according to claim 9, wherein:
the setting module comprises a state setting submodule, which is adapted to set the state information of the software component to "removed".

11. The terminal according to claim 10, wherein:
the setting module further comprises a time setting submodule, which is adapted to set a deadline of storing the information about the software component after the state setting submodule sets the state information of the software component to "removed".

12. The terminal according to claim 9, wherein:
the setting module comprises an information setting submodule, which is adapted to set the information about the software component into a software component management object.

13. The terminal according to claim 9, wherein the operation determining module comprises:
an installation determining submodule, adapted to: decide to install the software component received by the receiving module if the software component received by the receiving module is different from the removed software component; or
decide to install the software component received by the receiving module if the software component received by the receiving module is the same as the removed software component but version of the software component received by the receiving module is different from version of the removed software component; or
decide not to install the software component received by the receiving module; or
decide whether to install the software component received by the receiving module according to a preset policy.

14. The terminal according to claim 9, wherein the operation determining module further comprises:
an information storing submodule, adapted to keep storing the information about the removed software component if the software component received by the receiving module is the same as the removed software component, version of the software component received by the receiving module is the same as version of the removed software component, and a deadline of storing the information about the removed software component is different from current time.

## Patentansprüche

1. Verarbeitungsverfahren für die Installation einer Software-Komponente, wobei das Verfahren in einem Endgerät ausgeführt wird und Folgendes umfasst:
Empfangen einer durch einen Server gelieferten Software-Komponente; und
Bestimmen der Operationen, die an der gelieferten Software-Komponente auszuführen sind, in Übereinstimmung mit den Zustandsinformationen, die für eine entfernte Software-Komponente gesetzt und gespeichert sind, die vorher in dem Endgerät installiert war, oder den Informationen, die über die entfernte Software-Komponente gesetzt und gespeichert sind, wobei die Zustandsinformationen, die für die entfernte Software-Komponente gesetzt und gespeichert sind, oder die Informationen über die entfernte Software-Komponente gesetzt und gespeichert werden, wenn die entfernte Software-Komponente, die vorher in dem Endgerät installiert war, von dem Endgerät entfernt wird.

2. Verarbeitungsverfahren für die Installation einer Software-Komponente nach Anspruch 1, wobei:
das Setzen der Zustandsinformationen der entfernten Software-Komponente Folgendes umfasst: Halten eines Management-Unterbaums, der der entfernten Software-Komponente entspricht, und Setzen der Zustandsinformationen der Software-Komponente auf "entfernt".

3. Verarbeitungsverfahren für die Installation einer Software-Komponente nach Anspruch 2, wobei:
nach dem Setzen der Zustandsinformationen der Software-Komponente auf "entfernt" das Verarbeitungsverfahren ferner Folgendes umfasst: Setzen eines letzten Termins des Speicherns der Informationen über die Software-Komponente;
das Bestimmen der Operationen, die für die gelieferte Software-Komponente auszuführen sind, in Übereinstimmung mit den Zustandsinformationen, die für die entfernte Software-Komponente gesetzt sind, ferner Folgendes umfasst: weiterhin Speichern der Informationen über die entfernte Software-Komponente, falls die Version der gelieferten Software-Komponente die gleiche wie die Version der entfernten Software-Komponente ist, aber der letzte Termin vom momentanen Zeitpunkt verschieden ist.

4. Verarbeitungsverfahren für die Installation einer Software-Komponente nach Anspruch 1, wobei:
die Informationen über die entfernte Software-Komponente die Version der entfernten Software-Komponente und einen letzten Termin des Speicherns der Informationen über die Software-Komponente umfassen und einen Identifizierer der entfernten Software-Komponente und/oder einen Namen der entfernten Software-Komponente umfassen; und die Informationen über die entfernte Software-Komponente in einem Management-Objekt für Software-Komponenten gesetzt sind.

5. Verarbeitungsverfahren für die Installation einer Software-Komponente nach Anspruch 1, wobei: das Bestimmen der Operationen, die an der gelieferten Software-Komponente auszuführen sind, in Übereinstimmung mit den Zustandsinformationen, die für die entfernte Software-Komponente gesetzt sind, oder den Informationen über die entfernte Software-Komponente Folgendes umfasst:
falls die gelieferte Software-Komponente die gleiche wie die entfernte Software-Komponente ist, aber die Version der gelieferten Software-Komponente von der Version der entfernten Software-Komponente verschieden ist, Entscheiden, die gelieferte Software-Komponente zu installieren, oder Entscheiden, die gelieferte Software-Komponente nicht zu installieren, oder Entscheiden in Übereinstimmung mit einer vorgegebenen Strategie, ob die gelieferte Software-Komponente zu installieren ist.

6. Verarbeitungsverfahren für die Installation einer Software-Komponente nach Anspruch 5, wobei: die Informationen über die entfernte Software-Komponente ferner einen letzten Termin des Speicherns der Informationen über die Software-Komponente umfassen;
das Bestimmen der Operationen, die für die gelieferte Software-Komponente auszuführen sind, in Übereinstimmung mit den Informationen über die entfernte Software-Komponente ferner Folgendes umfasst:
weiterhin Speichern der Informationen über die entfernte Software-Komponente, falls die Version der gelieferten Software-Komponente die gleiche wie die Version der entfernten Software-Komponente ist, aber der letzte Termin des Speicherns der Informationen über die entfernte Software-Komponente vom momentanen Zeitpunkt verschieden ist.

7. Verarbeitungsverfahren für die Installation einer Software-Komponente nach Anspruch 1, wobei: das Bestimmen der Operationen, die für die gelieferte Software-Komponente auszuführen sind, in Übereinstimmung mit den Zustandsinformationen, die für die entfernte Software-Komponente gesetzt sind, oder den Informationen über die entfernte Software-Komponente Folgendes umfasst:
Installieren der gelieferten Software-Komponente, falls die gelieferte Software-Komponente von der entfernten Software-Komponente verschieden ist.

8. System für die Installation einer Software-Komponente, das Folgendes umfasst:
ein Endgerät, das dafür ausgelegt ist: eine durch einen Server gelieferte Software-Komponente zu empfangen und Operationen, die an der gelieferten Software-Komponente auszuführen sind, in Übereinstimmung mit den Zustandsinformationen, die für eine entfernte Software-Komponente gesetzt und gespeichert sind, die vorher in dem Endgerät installiert war, oder den Informationen, die über die entfernte Software-Komponente gesetzt und gespeichert sind, zu bestimmen, wobei die Zustandsinformationen, die für die entfernte Software-Komponente gesetzt und gespeichert sind, oder die Informationen über die entfernte Software-Komponente gesetzt werden, wenn die entfernte Software-Komponente, die vorher in dem Endgerät installiert war, von dem Endgerät entfernt wird; und
den Server, der dafür ausgelegt ist: die Zustandsinformationen der entfernten Software-Komponente oder die Informationen über die entfernte Software-Komponente abzufragen und zu erhalten, wobei die Informationen durch das Endgerät gesetzt und gespeichert werden, und Operationen, die an der gelieferten Software-Komponente auszuführen sind, in Übereinstimmung mit den Zustandsinformationen der entfernten Software-Komponente oder den Informationen über die entfernte Software-Komponente zu bestimmen.

9. Endgerät, das Folgendes umfasst:
ein Empfangsmodul, das dafür ausgelegt ist, eine Software-Komponente zu empfangen, die durch einen Server geliefert wird;
ein Setzmodul, das dafür ausgelegt ist, die Zustandsinformationen einer entfernten Software-Komponente, die vorher in dem Endgerät installiert war, zu setzen und zu speichern oder die Informationen über die entfernte Software-Komponente zu setzen und zu speichern, wenn die entfernte Software-Komponente, die vorher in dem Endgerät installiert war, von dem Endgerät entfernt wird; und
ein Operationsbestimmungsmodul, das dafür ausgelegt ist, Operationen, die an der Software-Komponente auszuführen sind, die durch das Empfangsmodul empfangen worden ist, in Übereinstimmung mit den Zustandsinformationen der entfernten Software-Komponente oder den Informationen über die entfernte Software-Komponente zu bestimmen, wobei die Informationen durch das Setzmodul gesetzt und gespeichert werden.

10. Endgerät nach Anspruch 9, wobei:
das Setzmodul ein Zustandssetz-Untermodul umfasst, das dafür ausgelegt ist, die Zustandsinformationen der Software-Komponente auf "entfernt" zu setzen.

11. Endgerät nach Anspruch 10, wobei:
das Setzmodul ferner ein Zeitsetz-Untermodul umfasst, das dafür ausgelegt ist, einen letzten Termin des Speicherns der Informationen über die Software-Komponente zu setzen, nachdem das Zustandssetz-Untermodul die Zustandsinformationen der Software-Komponente auf "entfernt" gesetzt hat.

12. Endgerät nach Anspruch 9, wobei:
das Setzmodul ein Informationssetz-Untermodul umfasst, das dafür ausgelegt ist, die Informationen über die Software-Komponente in ein Management-Objekt für Software-Komponenten zu setzen.

13. Endgerät nach Anspruch 9, wobei das Operationsbestimmungsmodul Folgendes umfasst:
ein Installationsbestimmungs-Untermodul, das dafür ausgelegt ist: zu entscheiden, die durch das Empfangsmodul empfangene Software-Komponente zu installieren, falls die durch das Empfangsmodul empfangene Software-Komponente von der entfernten Software-Komponente verschieden ist; oder
zu entscheiden, die durch das Empfangsmodul empfangene Software-Komponente zu installieren, falls die durch das Empfangsmodul empfangene Software-Komponente die gleiche wie die entfernte Software-Komponente ist, aber die Version der durch das Empfangsmodul empfangenen Software-Komponente von der Version der entfernten Software-Komponente verschieden ist; oder
zu entscheiden, die durch das Empfangsmodul empfangene Software-Komponente nicht zu installieren; oder
in Übereinstimmung mit einer vorgegebenen Strategie zu entscheiden, ob die durch das Empfangsmodul empfangene Software-Komponente zu installieren ist.

14. Endgerät nach Anspruch 9, wobei das Operationsbestimmungsmodul ferner Folgendes umfasst:
ein Informationsspeicherungs-Untermodul, das dafür ausgelegt ist, die Informationen über die entfernte Software-Komponente weiterhin zu speichern, falls die durch das Empfangsmodul empfangene Software-Komponente die gleiche wie die entfernte Software-Komponente ist, die Version der durch das Empfangsmodul empfangenen Software-Komponente die gleiche wie die Version der entfernten Software-Komponente ist und ein letzter Termin des Speicherns der Informationen über die entfernte Software-Komponente vom momentanen Zeitpunkt verschieden ist.

## Revendications

1. Procédé de traitement pour une installation de composant logiciel, le procédé étant exécuté sur un terminal, comprenant :
la réception d'un composant logiciel délivré par un serveur ; et
la détermination d'opérations à exécuter sur le composant logiciel délivré en fonction d'informations d'état établies et mémorisées d'un composant logiciel retiré précédemment installé sur le terminal ou d'informations établies et mémorisées relatives au composant logiciel retiré, les informations d'état établies et mémorisées du composant logiciel retiré ou les informations relatives au composant logiciel retiré étant établies et mémorisées quand le composant logiciel retiré précédemment installé sur le terminal est retiré du terminal.

2. Procédé de traitement pour une installation de composant logiciel selon la revendication 1, dans lequel :
l'établissement des informations d'état du composant logiciel retiré comprend : la tenue à jour d'une sous-arborescence de gestion correspondant au composant logiciel retiré et l'établissement des informations d'état du composant logiciel sur "retiré".

3. Procédé de traitement pour une installation de composant logiciel selon la revendication 2, dans lequel :
après l'établissement des informations d'état du composant logiciel sur "retiré", le procédé de traitement comprend en outre : l'établissement d'un délai de mémorisation des informations relatives au composant logiciel ;
la détermination des opérations à exécuter pour le composant logiciel délivré en fonction des informations d'état établies du composant logiciel retiré comprend en outre : la mémorisation continue des informations relatives au composant logiciel retiré si la version du composant logiciel délivré est la même que la version du composant logiciel retiré mais le délai est différent du temps courant.

4. Procédé de traitement pour une installation de composant logiciel selon la revendication 1, dans lequel :
les informations relatives au composant logiciel retiré comprennent la version du composant logiciel retiré et un délai de mémorisation des informations relatives au composant logiciel, et comprennent au moins l'un d'un identifiant du composant logiciel retiré et d'un nom du composant logiciel retiré ; et les informations relatives au composant logiciel retiré sont établies dans un objet de gestion de composant logiciel.

5. Procédé de traitement pour une installation de composant logiciel selon la revendication 1, dans lequel : la détermination des opérations à exécuter sur le composant logiciel délivré en fonction des informations d'état établies du composant logiciel retiré ou des informations relatives au composant logiciel retiré comprend :
si le composant logiciel délivré est le même que le composant logiciel retiré mais la version du composant logiciel délivré est différente de la version du composant logiciel retiré, la décision d'installer le composant logiciel délivré, ou la décision de ne pas installer le composant logiciel délivré, ou la décision d'installer ou non le composant logiciel délivré en fonction d'une règle préétablie.

6. Procédé de traitement pour une installation de composant logiciel selon la revendication 5, dans lequel : les informations relatives au composant logiciel retiré comprennent en outre un délai de mémorisation des informations relatives au composant logiciel ;
la détermination des opérations à exécuter pour le composant logiciel délivré en fonction des informations relatives au composant logiciel retiré comprend en outre :
la mémorisation continue des informations relatives au composant logiciel retiré si la version du composant logiciel délivré est la même que la version du composant logiciel retiré mais le délai de mémorisation des informations relatives au composant logiciel retiré est différent du temps courant.

7. Procédé de traitement pour une installation de composant logiciel selon la revendication 1, dans lequel : la détermination des opérations à exécuter pour le composant logiciel délivré en fonction des informations d'état établies du composant logiciel retiré ou des informations relatives au composant logiciel retiré comprend :
l'installation du composant logiciel délivré si le composant logiciel délivré est différent du composant logiciel retiré.

8. Système d'installation de composant logiciel, comprenant :
un terminal, adapté pour : recevoir un composant logiciel délivré par un serveur, et déterminer des opérations à exécuter sur le composant logiciel délivré en fonction d'informations d'état établies et mémorisées d'un composant logiciel retiré précédemment installé sur le terminal ou d'informations établies et mémorisées relatives au composant logiciel retiré, les informations d'état établies et mémorisées du composant logiciel retiré ou les informations relatives au composant logiciel retiré étant établies quand le composant logiciel retiré précédemment installé sur le terminal est retiré du terminal ; et
le serveur, adapté pour : interroger et obtenir les informations d'état du composant logiciel retiré ou les informations relatives au composant logiciel retiré, les informations étant établies et mémorisées par le terminal, et déterminer des opérations à exécuter sur le composant logiciel délivré en fonction des informations d'état du composant logiciel retiré ou des informations relatives au composant logiciel retiré.

9. Terminal, comprenant :
un module de réception, adapté pour recevoir un composant logiciel délivré par un serveur ;
un module d'établissement, adapté pour établir et mémoriser des informations d'état d'un composant logiciel retiré précédemment installé sur le terminal ou des informations établies et mémorisées relatives au composant logiciel retiré quand le composant logiciel retiré précédemment installé sur le terminal est retiré du terminal ; et
un module de détermination d'opérations, adapté pour déterminer des opérations à exécuter sur le composant logiciel reçu par le module de réception en fonction des informations d'état du composant logiciel retiré ou des informations relatives au composant logiciel retiré, les informations étant établies et mémorisées par le module d'établissement.

10. Terminal selon la revendication 9, dans lequel :
le module d'établissement comprend un sous-module d'établissement d'état, lequel est adapté pour établir les informations d'état du composant logiciel sur "retiré".

11. Terminal selon la revendication 10, dans lequel :
le module d'établissement comprend en outre un sous-module d'établissement de temps, lequel est adapté pour établir un délai de mémorisation des informations relatives au composant logiciel après que le sous-module d'établissement d'état établit les informations d'état du composant logiciel sur "retiré".

12. Terminal selon la revendication 9, dans lequel :
le module d'établissement comprend un sous-module d'établissement d'informations, lequel est adapté pour établir les informations relatives au composant logiciel dans un objet de gestion de composant logiciel.

13. Terminal selon la revendication 9, dans lequel le module de détermination d'opérations comprend :
un sous-module de détermination d'installation, adapté pour : décider d'installer le composant logiciel reçu par le module de réception si le composant logiciel reçu par le module de réception est différent du composant logiciel retiré ; ou
décider d'installer le composant logiciel reçu par le module de réception si le composant logiciel reçu par le module de réception est le même que le composant logiciel retiré mais la version du composant logiciel reçu par le module de réception est différente de la version du composant logiciel retiré ; ou
décider de ne pas installer le composant logiciel reçu par le module de réception ; ou
décider d'installer ou non le composant logiciel reçu par le module de réception en fonction d'une règle préétablie.

14. Terminal selon la revendication 9, dans lequel le module de détermination d'opérations comprend en outre :
un sous-module de mémorisation d'informations, adapté pour continuer de mémoriser les informations relatives au composant logiciel retiré si le composant logiciel reçu par le module de réception est le même que le composant logiciel retiré, la version du composant logiciel reçu par le module de réception est la même que la version du composant logiciel retiré, et un délai de mémorisation des informations relatives au composant logiciel retiré est différent du temps courant.
